# EUROPEAN PATENT SPECIFICATION

(11) **EP 1 373 063 B1**
(45) Date of publication and mention of the grant of the patent: **06.07.2005**
(21) Application number: 01914901.2
(22) Date of filing: 21.03.2001
(51) Int. Cl.: B63B 25/14, F17C 1/00

(54) **CONTAINMENT STRUCTURE AND METHOD OF MANUFACTURE THEREOF**
BEHÄLTERVORRICHTUNG UND VERFAHREN ZU DESSEN HERSTELLUNG
STRUCTURE DE RETENTION ET PROCEDE DE FABRICATION DE CETTE STRUCTURE

(43) Date of publication of application: 02.01.2004
(73) Proprietor: Williams Power Company, Inc., Tulsa, Oklahoma 74172 (US)
(72) Inventor: FITZPATRICK, P., John, Calgary, Alberta T2L 1A7 (CA); STENNING, David, G., Calgary, Alberta T2T 1W8 (CA); CRAN, James, A., Calgary, Alberta T2T 2K8 (CA)
(74) Representative: Horner, David Richard
(86) International application number: PCT/CA2001/000360
(87) International publication number: WO 2002/074616

(56) References cited:
- CA-A- 2 283 007
- DE-A- 2 305 840
- DE-A- 19 547 752
- US-A- 3 432 060
- US-B1- 6 240 868
- PATENT ABSTRACTS OF JAPAN vol. 005, no. 155 (M-090), 30 September 1981 (1981-09-30) & JP 56 083656 A (TATSUMI ATSUSHI), 8 July 1981 (1981-07-08)

## Description

### FIELD OF THE INVENTION:

This invention relates to containment structures and methods of manufacture thereof, particularly for the marine transport and storage of compressed natural gases.

### BACKGROUND OF THE INVENTION:

The invention relates particularly to the marine gas transportation of compressed gas. Because of the complexity of existing marine gas transportation systems significant expenses are ensued which render many projects uneconomic. Thus there is an ongoing need to define storage systems for compressed gas that can contain large quantities of compressed gas, simplify the system of complex manifolds and valves, and also reduce construction costs. This specific system purports to do all three. The structures described here are an improvement on the structure disclosed in US patent 5,839,383 issued November 24, 1998.

JP-A-56-083656 describes a pressure vessel having a pipe which forms a continuously spiral form.

### SUMMARY OF THE INVENTION

Particular and preferred aspects of the present invention are set out in the accompanying independent and dependent claims.

A number of designs of containment structure are disclosed as embodiments of the present invention, in which plural loops of coiled pipe are formed into plural layers, including at least a first layer and a second layer. Pipe forms connections between the layers. In one embodiment, coiled pipe in the first layer is coiled in a different manner from coiled pipe in the second layer. In another embodiment, coiled pipe in at least one of the layers is formed with sections having different radiuses of curvature. In another embodiment, coiled pipe in at least one of the layers is formed with sections forming portions of nested perfect circles. In another embodiment, coiled pipe in at least one of the layers is formed with sections having different centers of curvature. In another embodiment, the connecting pipe forms connections between non-adjacent layers. In another embodiment, the pipe is provided with a support matrix formed of mixtures of different fluids surrounding the layers of pipe. In another embodiment, the support matrix comprises a fluid having a specific gravity greater than 1. In another embodiment, the support matrix is formed of plastic material conformed to the pipe. In another embodiment, the pipe forms a pyramidal form. In another embodiment, the pipe is carbon fiber pipe. Various embodiments are formed of any workable combination of these features.

In one embodiment of the invention, there is provided a containment structure comprising a continuous coiled pipe formed in at least a first layer and a second layer lying on top of the first layer, coiled pipe in the second layer lying directly on top of and preferably aligned with the coiled pipe in the first layer, apart from a first transition zone in which coiled pipe in the first layer rises to form part of the second layer and cross coiled pipe in the first layer.

In one embodiment of the invention, there is provided a method of forming a containment structure, comprising forming a continuous coiled pipe in at least a first layer and a second layer lying on top of the first layer, with coiled pipe in the second layer lying directly on top of and aligned with the coiled pipe in the first layer, apart from a first transition zone in which coiled pipe in the first layer rises to form part of the second layer and cross coiled pipe in the first layer.

In one embodiment of the invention, there is provided a containment structure comprising a continuous constant diameter coiled pipe formed in a single layer of alternating constant radius circle segments, in which each circle segment covers 360/n degrees, with each succeeding circle segment being 1/n pipe diameters greater in radius than a preceding circle segment, where n is greater than 1.

The containment structure of embodiments of the invention is particularly suited for use as a gas storage system, particularly adapted for the transportation of large quantities of compressed gas on board a ship (within its holds, within secondary containers) or on board a simple barge (above or below its deck, within secondary containers). The coiled pipe is preferably formed of long, primarily circularly curved sections of small diameter steel pipe. The pipe, generally smaller than 8 inches may be coiled in a specific manner within a simple circular container.

In one embodiment, the diameter of the container is about 50 feet and it is about 10 feet high. Approximately 10 miles of pipe or more may be coiled and stacked within the container. The coiling is continuous and there are no valves or interruptions from the start to the end of the coil.

In one embodiment of the invention, the pipe may be viewed as starting at the inside of the bottom layer. It spirals outwards by means of constant curvature constant radius segments, preferably semi-circles, which abruptly change their curvature and also their centers of curvature by a small percentage of their gross curvature and their radii respectively. By this means programming and quality control on the bending rollers are kept constant and simple for relatively long periods of time. When the pipe reaches the outside of the container it is forced by the geometry of the container to climb up to the second layer and then start an inwards spiral. After two semi-circular arcs the pipe follows a transition curve which takes it across two pipes immediately below, in a distance of about 12 pipe s. This distance is relatively short and thus vertical stacking stresses at crossover points are minimized. By transitioning two pipes beneath and then by spiraling back out one of the pipe, immediately above the first and subsequent odd layers, a net inwards spiral gain of one pipe is thus achieved. Thus the odd layers spiral outwards and the even layers spiral inwards. When the pipe reaches the inside of the circular container, in even layers, it rises to the odd layers above and its projected plan geometry becomes the same as the geometry of the first layer. Thus the odd layers are composed entirely of semicircles and the even layers are composed of semicircles with very short transition zones.

Embodiments of the invention include both the containment structure produced by the layered coiled pipes, which lie directly upon each other except for the transition zone, and the method of coiling the pipes to obtain the structure.

The gas storage system of embodiments of this invention has many advantages, some of which are noted in earlier patents filed by two of the inventors (United States patents nos. 5,839,383 and 5,803,005). First, the pipe is small and the severity of failure is greatly reduced. Possibly also the probability of failure is also reduced. Second, the technology for the production of long straight and subsequently constantly curved pipe is well known and inexpensive. Third, the system is continuously inspectable by means of an internal pig. Fourth, complicated curved features are absent for about 97% of the coiled length. Fifth, the coiled layout and vertical stacking arrangement reduce gravitational stresses and ship motion stresses to a small fraction of the pipe capacity, even when stacked about 20 to 30 s high. All of these features lead to great cost reductions.

Other features and advantages of the invention become apparent when viewing the drawings and upon reading the detailed description.

### BRIEF DESCRIPTION OF THE DRAWINGS:

Preferred embodiments of the invention will now be described, with reference to the drawings, by way of illustration only and not with the intention of limiting the scope of the invention, in which like numerals denote like elements and in which:
Fig. 1 shows a plan of a layer of pipe;
Fig. 1A shows a section along the line 1A-1A of Fig. 1;
Fig. 1B is a detail of Fig. 1;
Fig. 2 is an enlarged plan view of the outer transition portion of Fig.1;
Fig. 3 is an enlarged plan view of the inner transition portion of Fig.1;
Figs. 4A, 4B, 4C, 4D, 4E, 4F and 4G are a series of cross-sections of sections marked on Figs. 2 and 3;
Fig. 5 is a reproduction of the computer program used to define exactly the geometry, lines and co-ordinates of Fig.1B; more particularly the mathematical reduction mechanism used to define the transition curves;
Figs. 5A and 5B show right handed and left hand spirals of continuously changing curvature;
Figs. 6A and 6B show sections of pipe with sections of incrementally increasing radius of curvature forming polycircular spirals;
Fig. 7A shows a pipe with a stepped circular spiral;
Fig. 7B shows a double inward step on a two center outward polycircular spiral;
Fig. 7C shows a pipe with two single inward steps per revolution on a two center outward polycircular spiral;
Fig. 8a shows a layer of pipe formed as a four center square spiral;
Fig. 8B shows a layer of pipe formed as a two center square spiral;
Fig. 8C shows a layer of pipe formed as a four center square spiral;
Fig. 9A shows a direct superposition of two spirals;
Fig. 9B shows a superposition of two circular spirals with 180 degree rotation of one spiral with respect to the other;
Fig. 9C shows two identical spiral, with one an extra half turn long, so both end up on the same side of the coil for ease of connection, and shows pipe connections joining adjacent layers;
Fig. 9D shows a second spiral flipped about an axis in the plane of the spiral;
Fig. 9E shows a pure circular spiral following Fig. 7A;
Fig. 10A shows a rectangular pipe layer with a pipe connection between inner spirals;
Fig. 10B shows a plan view of a rectangular pipe payer with two rectangular spirals superimposed with 180 degree rotation;
Fig. 11A shows an S-bend section joining adjacent layers;
Fig. 11B shows an S-bend section between adjacent layers on the outside of the stacks;
Fig. 12 shows a stack of spiral pairs as shown in Figs. 9B and 9C and 10A and 1B can be connected to make one pipe;
Fig. 12A shows a pyramidal pipe structure with succeeding layers having reduced width;

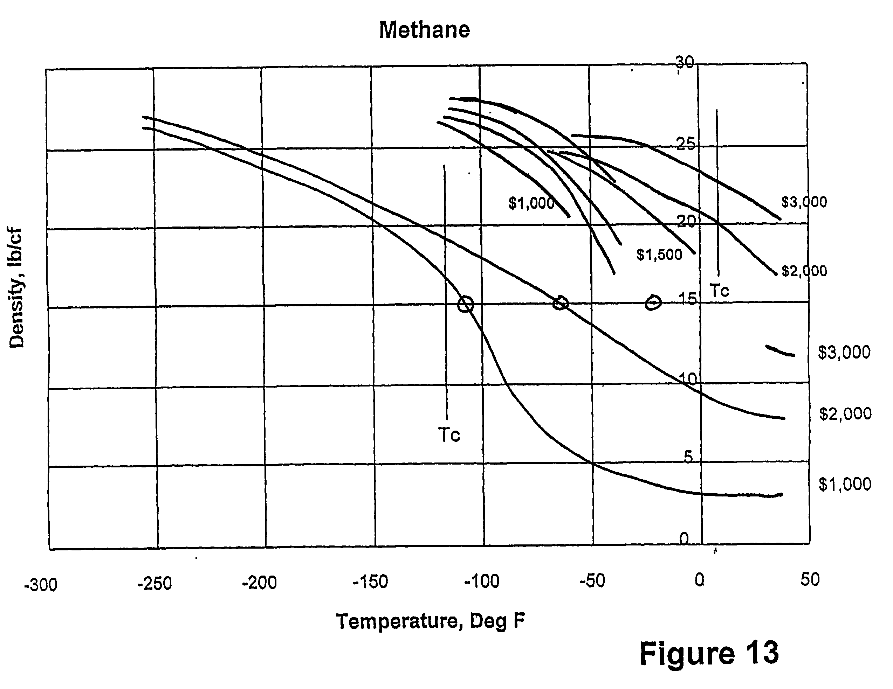

Fig. 13 is a T-P graph for methane.

### DETAILED DESCRIPTION OF PREFERRED EMBODIMENTS:

Referring now to the drawings, where corresponding similar parts are referred to by the same numerals throughout the different figures, the preferred embodiments are now described. It is also understood that the material employed to make the pipe and its connections will be ductile and not brittle at the proposed operating temperatures. The pipe and its connections may be fabricated from normal grade steel typically X70. The word comprising is inclusive and does not exclude other features being present. The indefinite article "a" does not exclude more than one of an element being present. The radius of the coiled pipe generally refers to the radius of the coil. When the cross-sectional diameter of the pipe is referred to, it is referred to as the diameter of the pipe. It will be understood that a continuous coiled pipe will be made of pipes welded together to make it continuous.

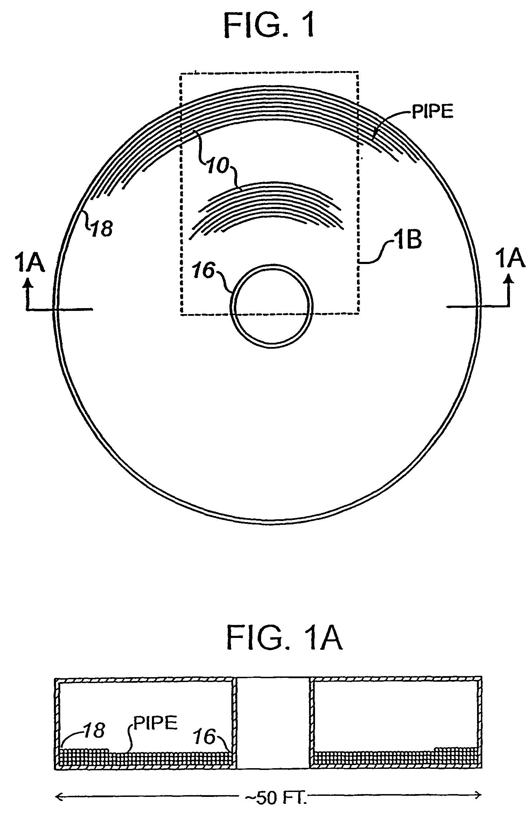

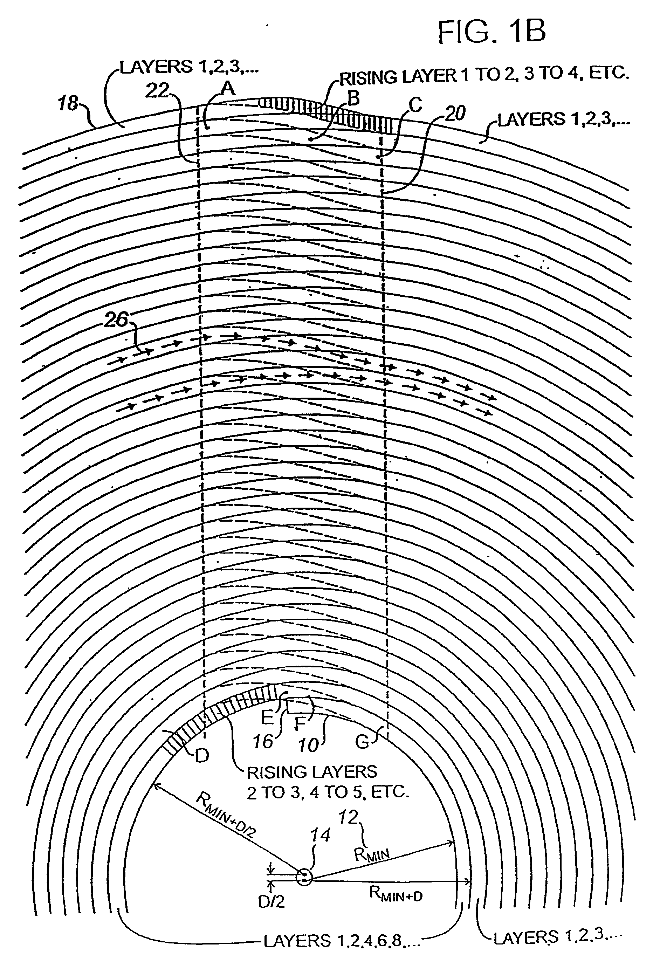

Figs. 1-4 shows a particular embodiment incorporating certain aspects of the invention. Figs. 1 and 1B in detail depict a plan view of portion of the bottom two layers of a generally circular continuous length of small pipe. Other pipe layers subsequently lie on these bottom layers and their plan projected lines fall either on the first layer, shown solid lined if the layer is odd numbered, or on the dotted transition lines and the solid lines if the layer is even numbered. The coiled pipe of a subsequent layer lies directly upon and aligned with the coiled pipe of a previous layer, except in the transition zone to be described. There is thus a linear contact zone between pipe in succeeding layers that distributes the weight of the pipe in an optimal manner.

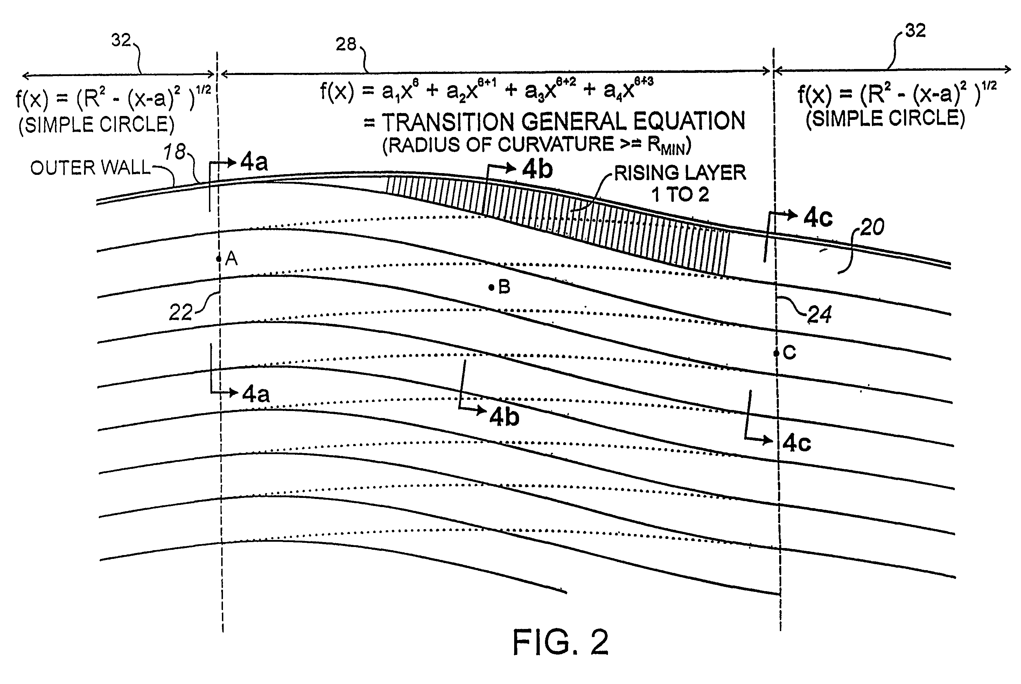

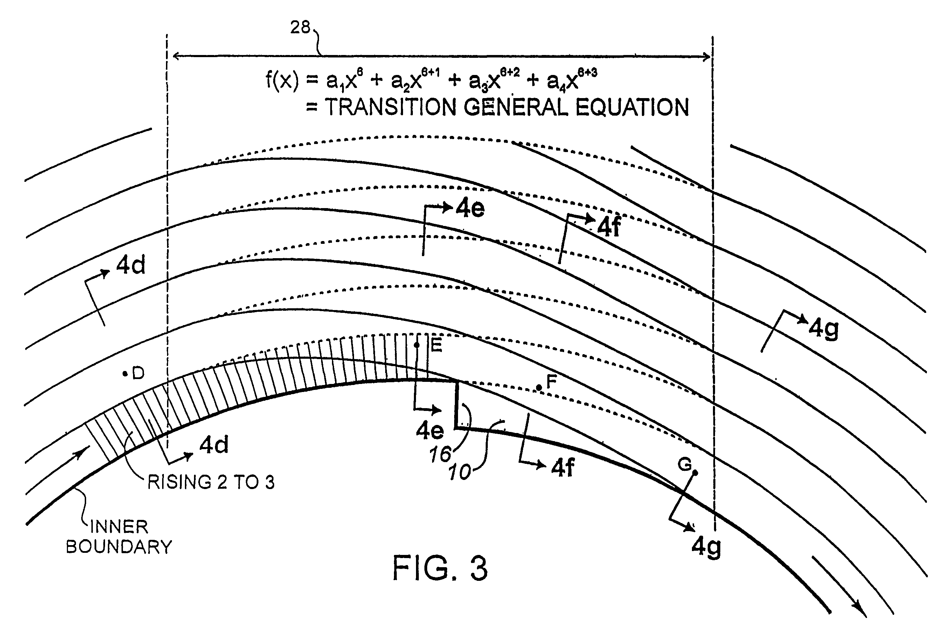

The first layer 10 begins with a small pipe with internal radius Rₘᵢₙ 12 and describes a half circle. The center of curvature is then abruptly shifted by half the pipe and the radius is also increased by half a pipe. This results in bringing the inside of pipe exactly tangential as shown at 16 to the outside of the start of the pipe spiral 10. Thus the path of the pipe has moved out one pipe diameter in one sweep of 360 degrees by the use of two specific half circles. This reduces the complexity of input to the bending rollers, which impart the prescribed bending curvature, to two constants. The bottom layer proceeds outwards in this manner with ever increasing half circles. When the pipe reaches the outside of the container 18 it is forced to rise up and land directly on top of the outside of layer one 20 and then it continues around as layer two until it reaches the start of the transition zone 22. Then by the path dictated by a prescribed mathematical formula, as outlined in Figs 2, 3 and. 5, it leaves the pipe directly underneath in a horizontally tangential fashion and joins tangentially and immediately above the pipe beneath, but some two pipe diameters inwards.

This transition shown A B C is accomplished within a distance of about 12 pipe diameters and receives point crossover support at the point B.

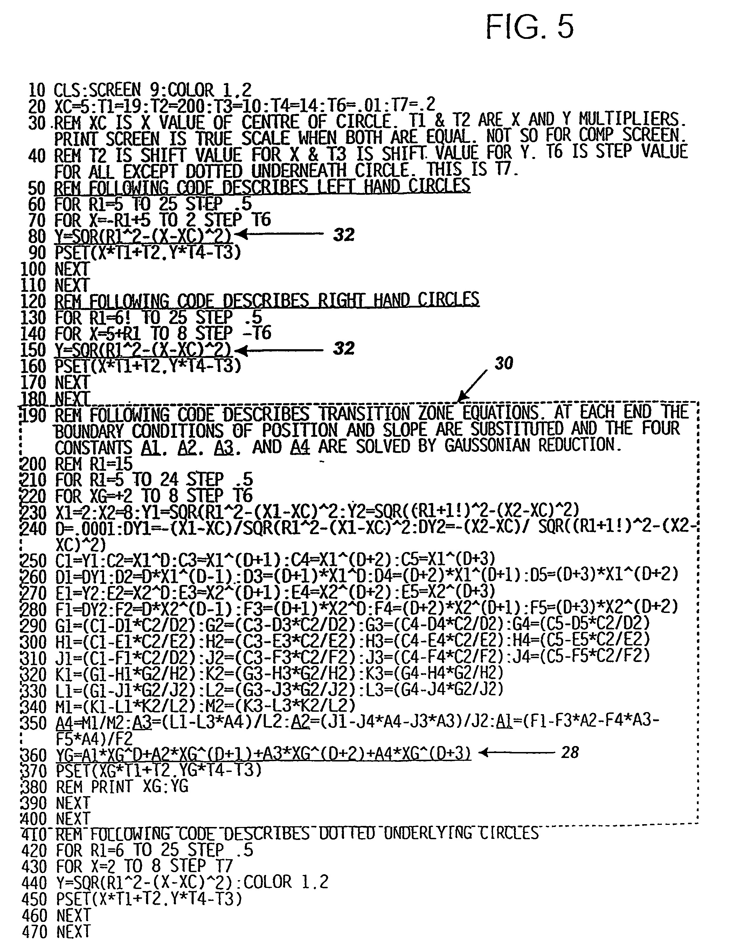

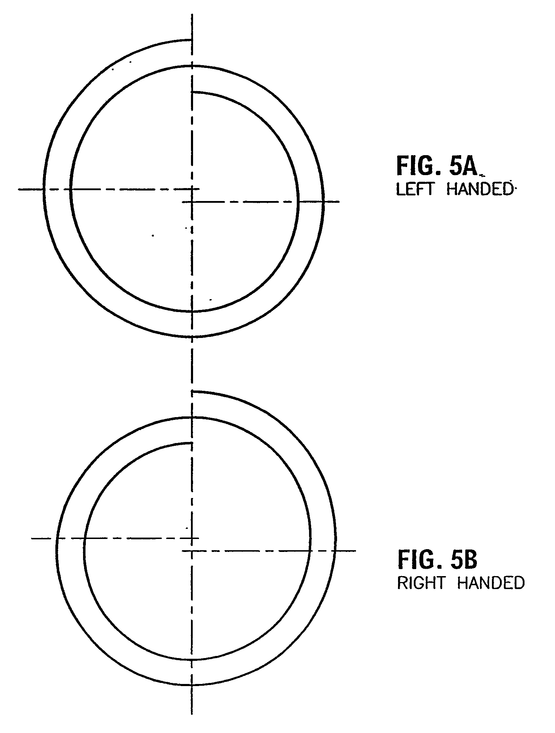

This short transition length means that only 3% of the coiling has continuously changing curvature. The arrows 26 show how by moving inwards by two pipe diameters and by moving back outwards by one that even layers have a net inwards spiral translation even though they lie directly on top of and aligned with an outwards spiral for about 94% of the time. The following are some summary statements relating to Fig 1:
- Odd layers spiral outwards and even layers spiral inwards.
- Odd layers have no transition zones.
- Even layers have a transition zone equal to approximately 12 pipe diameters.
- About 97% of the coiling uses pure circular curvature.
- Outside of the transition zone, which represents about 94 % of the total coiling, all pipes in each layer, (about 40 or more layers), lie directly on top of one another.
- Throughout the entire coiling system, both inside and outside of the transition zone, the radius of curvature is greater than about 11 diameters. This is true also where layers change from one to another. Hence the maximum bending strain does not exceed a certain prescribed limit of approximately 5%.
- Where a lower layer rises to a higher layer, at the outside and at the inside, the transition equation (in Fig. 5) is also used. However it is combined with two short reverse circular arcs joined by a tangent, in the vertical plane to accommodate the rise as well as the lateral translation.
- At the outside, rising layers go from odd to even and at the inside rising layers go from even to odd.
- Every 180 degrees, in the odd layers, the radius of curvature changes abruptly by an amount equal to one half-pipe diameter. Additionally the center of curvature changes by an equal amount, thus permitting a total radial translation of one pipe diameter after 360 degrees.
The references to even and odd layers can be interchanged by inserting the transition zone in the lowermost layer, but this is slightly disadvantageous since the bottom most layer will then suffer greater stresses on the lowest cross-over points than if they were in the second layer.

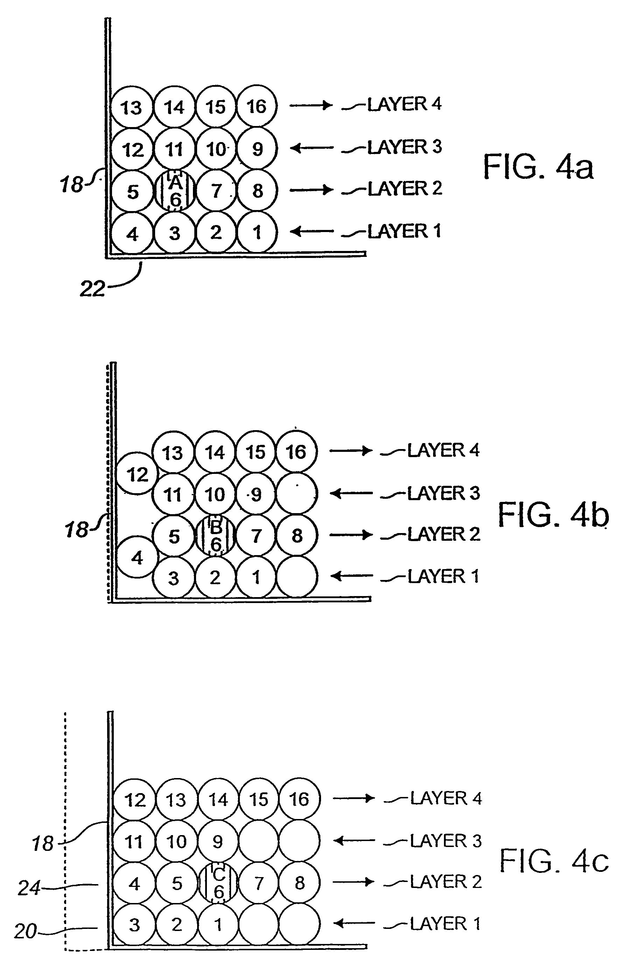

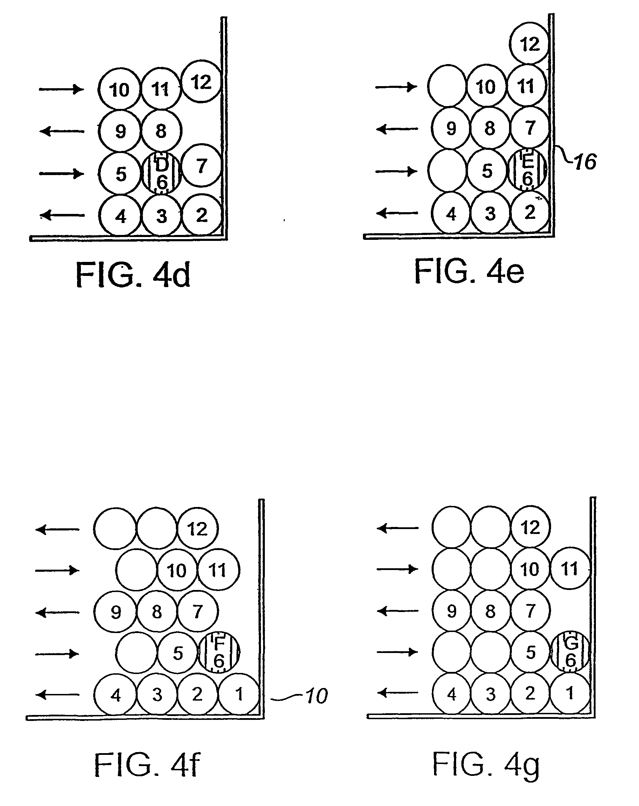

Fig. 2 is an enlargement of the outer portion of the transition area. The basic transition generalized equation 28 is quoted and the mechanics of the solution 30 is depicted in Fig.5. Depicted in Fig.2 also is the simple function 32 that describes the pure half circles that make up 97% of the coiling geometry. Position cross-sections A B C are shown and these can be tracked later in Fig. 4 to complete the three-dimensional picture. Fig. 2 also shows the outer wall 18 of the container and it's accompanying transitional nature.

Fig. 3 is an enlargement of the inner portion of the transition area. The section locations D E F G are shown and later depicted in Fig.4. The generalized transition function 28 is exactly the same as in Fig.2 however the specific values of the constants are different numerically. This numerical difference results in transition curves that do not have reverse curvature, as is the case with the outer transition curves.

Figs.4A-4G depict the bottom 4 or 5 layers at the inside and outside of the coil container vessel. Tracking pipe number 6 for instance depicts the paths A B C and D E F G shown in the first three figures. Tracking of pipe number 4 in sections A, B and C shows how the first layer changes into the second layer. Here it can be seen why only odd layers rise at the outside. Similarly it can be observed that only even layers rise at the inside.

A more detailed description of Figs. 4A-4G now follows. The start of the pipe coil can be seen in section F at the pipe with the number 1 in its center. Section G immediately above shows pipe number 1 and this portion of the pipe is placed shortly after that in section F. The next portion of pipe placed is seen in section D and is numbered 2 in its center. After that the next portion is in section E and is shown numbered 2 in its center. Thus the sequence of how the pipe is placed at the start of the bottom or first layer can be described as F1, (meaning section F, pipe number 1), G1, D2, E2, F2, G2, D3, E3, F3, G3, D4, E4, F4, G4. This procedure is continued outwards one pipe diameter at a time until position A1 in section A is reached. The finishing placement sequence for the first layer can be described as A1, B1, C1, A2, B2, C2, A3, B3, C3, and A4. Thus this describes the placement of the first layer which winds outwards. The pipe then rises up and begins to move inwards in the second layer. The sequence is given by B4, C4, A5, B5, C5, A6, B6, C6, A7, B7, C7, A8, B8, and C8. This procedure is continued inwards one pipe diameter at a time until position D5 in section D is reached. The finishing placement sequence for the second layer can be described as D5, E5, F5, G5, D6, E6, F6, G6,. The pipe then starts to rise up at D7 and reaches the third layer at E7, whereupon the outwards moving sequence becomes F7, G7, D8, E8, F8, G8, D9, E9, F9, G9. The rest of the coiling continues in a similar fashion outwards and inwards following the sequence A9, B9, C9, A10, B10, C10, A11, B11, C11, A12, B12, C12, A13, B13, C13, A14, B14, C14, A15, B15, C15, A16, B16,C16,.....D10, E10, F10, G10, D11, E11, F11, G11, D12, E12, F12 and G12. Only the first five layers are represented in Figs. 4A-4G. The pattern repeats itself for as many layers as are required, typically 20 or 30.

Fig.5 depicts a brief program, written in basic language, which describes the geometry shown in the first three figures. The print functions are graphical but the output can be easily expressed in a numerical co-ordinate system. The principal feature of the program 30 between lines 190 and 400 is the mathematical description of how the constants for the transition equation are solved. The solution method is essentially a variation of a standard Gaussonian reduction method. The actual general equation 28 is unique to this process of coiling. Also the exponent (D, in line 240) used in the equation is unique in that it can be used as a tuning parameter to provide almost perfect nesting of the pipe in the transition zone.

It will be thus seen that this embodiment of the invention provides: A specific method or system of coiling small diameter pipe having a long continuous length of small diameter pipe approximately 10 miles (approximately 5 to 8 inches in diameter). About 97% of the pipe is bent to a constant curvature over intervals of approximately 180 degree arcs (such simplicity of constant curvature greatly reduces the cost of construction). A unique transition method (for about 3% of the coil length) enables about 94% of the pipe to lie directly beneath or on top of another pipe. Such a stacking pattern greatly reduces local bending and crossover stresses and thus reduces the overall wall thickness of the pipe or increases the permissible stacking height in each container. A method of coiling pipe that continuously spirals outwards and inwards by the use of stepped constant curvature for approximately 97% of it's total length. A mathematical method for describing the specific coiling geometry.

Although the coils are shown in constant radius half circles, these could be segments of 360/n degrees, with each segment increasing in diameter 1/n pipe diameters, where n is greater than 1, but each increase of n over 2 increases the number of pipe bend settings and is not preferred. In the containment structure produced by this method, coiled pipe in any kth segment abuts coiled pipe in the k+nth segment for each kth segment except segments forming an outer boundary of the containment structure, to thus form a gapless structure. Although an embodiment has been shown in which the transition zone occupies 12 pipe diameters, advantages are still believed to be obtained when the transition zone occupies less than 50 pipe diameters.

The coiled pipe forms a containment structure that will normally be provided with valves 37 at either end of the pipe. The coiled pipe is suitable for the containment of gas. The coiled pipe is preferably enclosed within the container 18, which is preferably sealed to provide a secondary containment structure, and equipped with leak detection equipment.

Now are described further embodiments of the invention, beginning with various coil stacks comprised of multiple flat spirals.

Figs. 5A and 5B show spirals with continuously changing curvature. For purposes of terminology, Figure 5A depicts a left-hand spiral and Figure 5B a right hand spiral. Handedness is determined by holding the thumb upwards and seeing for which hand the fingers follow the pipe in an outgoing direction. The figure 5B is obtained from figure 5A by flipping it over, that is to say, by a 180-degree rotation about an axis in the plane of the coil.

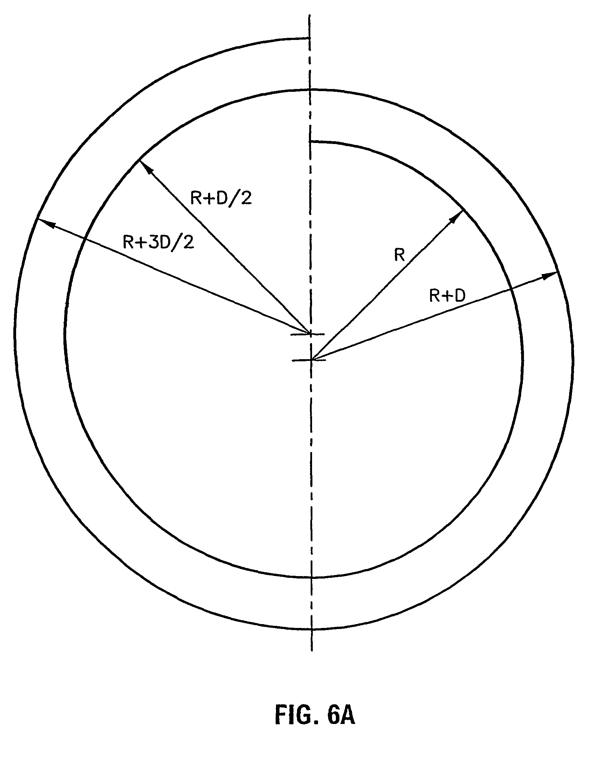

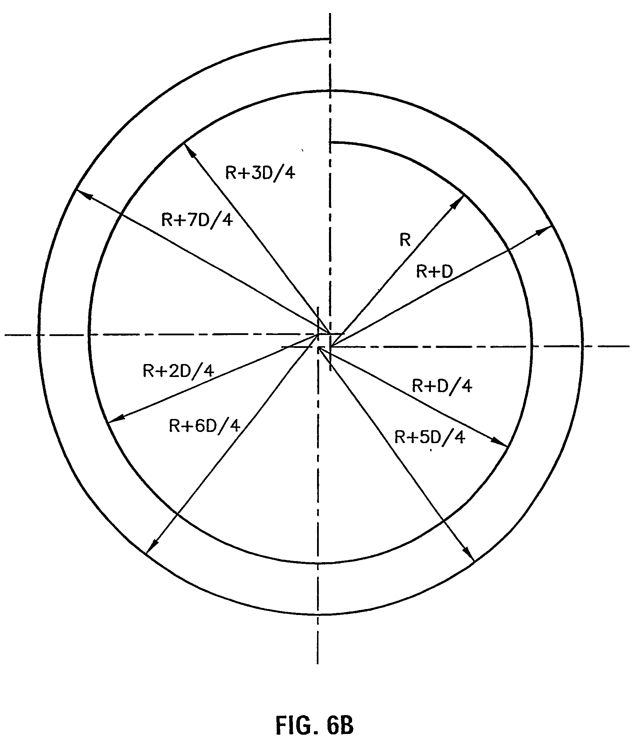

Figs. 6A and 6B shows poly-circular spirals. Figure 6A depicts a 2-center poly-circular spiral generated by the two centers C1 and C2 on a vertical axis separated by a distance of D/2 where D is the diameter of the pipe. Arc A1.1 is drawn through 180 degrees by radius R from center C1, arc A2.1 is drawn through 180 degrees by radius R+D/2 from center C2, arc A1.2 is drawn through 180 degrees by radius R+D from center C1, and so on. Figure 6B depicts a 4-center generated by four centers spaced apart by D/4, where the arcs of constant radius are 90 degrees long and the radius increases by D/4 between adjacent arcs. Many other poly-circular spirals are possible. The interest in this variant is the possibility that continuously changing curvature is too difficult for a winding machine to accurately produce.

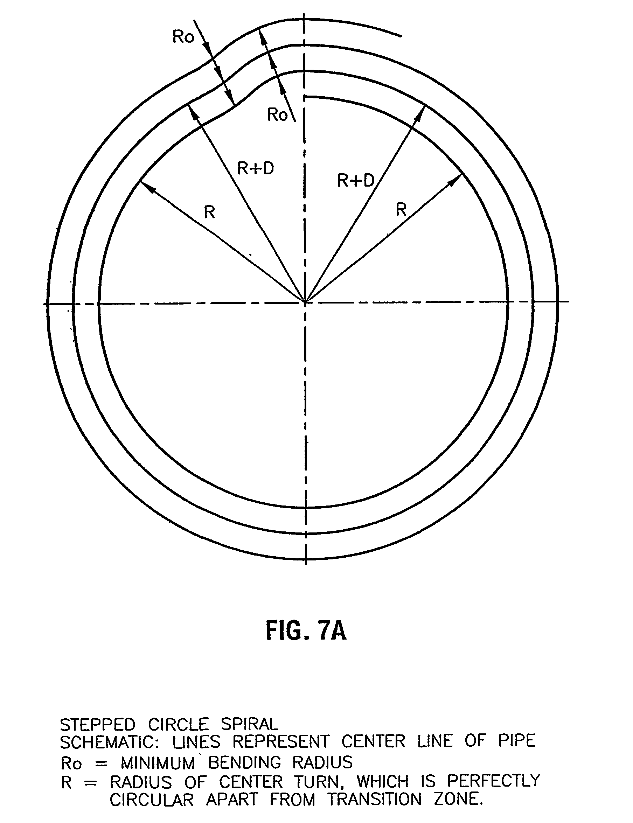

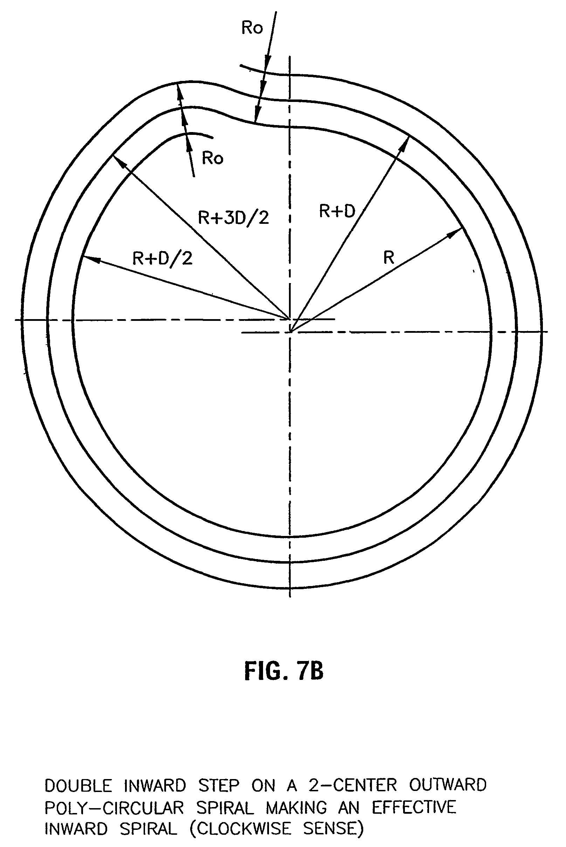

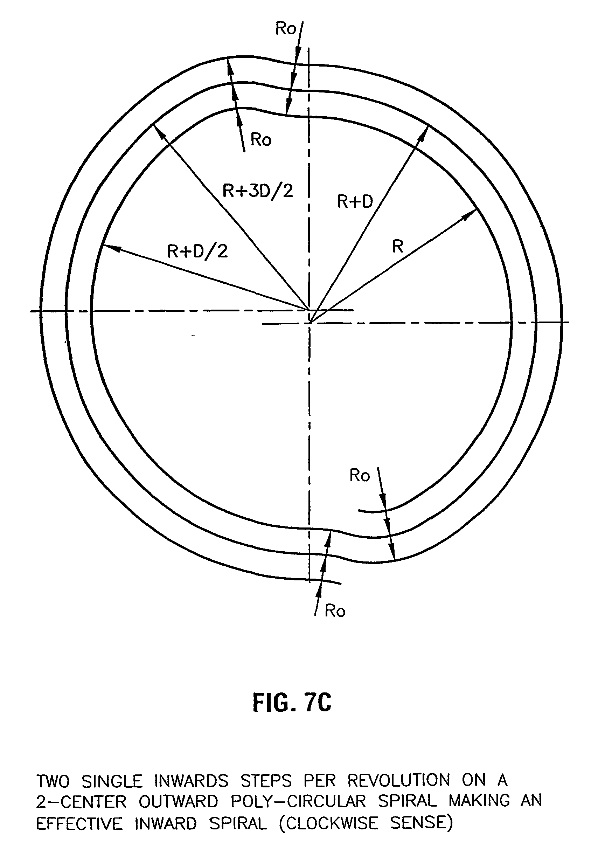

Fig. 7A shows a stepped circular spiral. In this spiral the pipes are nested perfect circles with radii increasing in steps of D, except for a small transition zone containing an S-bend made up of negative and positive arcs whose radii are the minimum bending radius. These arcs are so positioned that there is no change of curvature at the point of moving between the arcs or between the arcs and the circles. The transition zones change the series of circles into an outward spiral (in a clockwise sense). Transition zones can be inward stepping as well as outward as shown in figure 7B. Here the basic spiral is a 2-center outward poly-circular spiral. The transition zones make a double inward step, making an effective inward spiral. Figure 7C takes the same 2-center outward poly-circular spiral and by taking two single inward steps per revolution also converts an outward spiral into an inward spiral. While there are now two transition zones, the advantage is that they are shorter than the respective double transition zone.

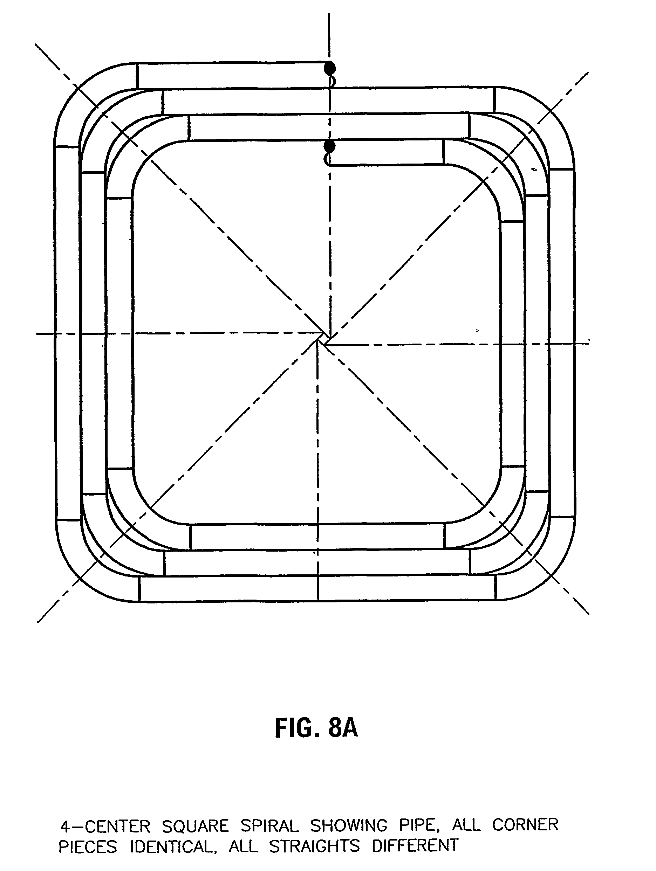

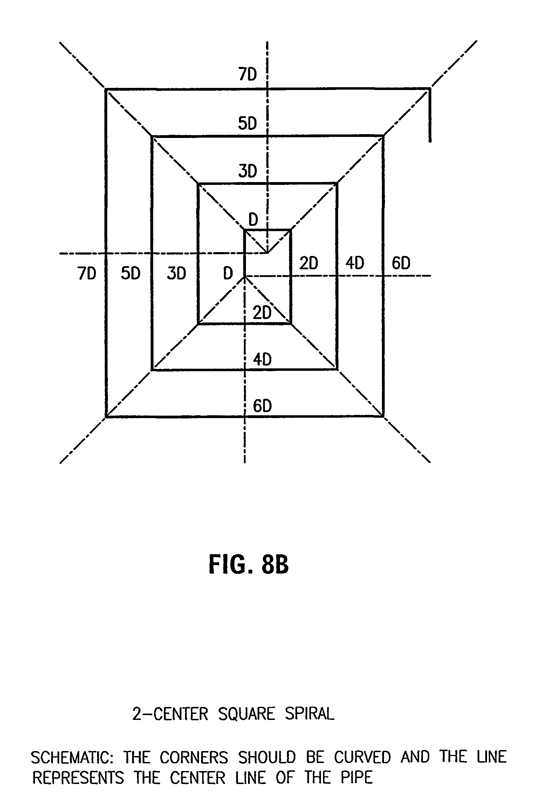

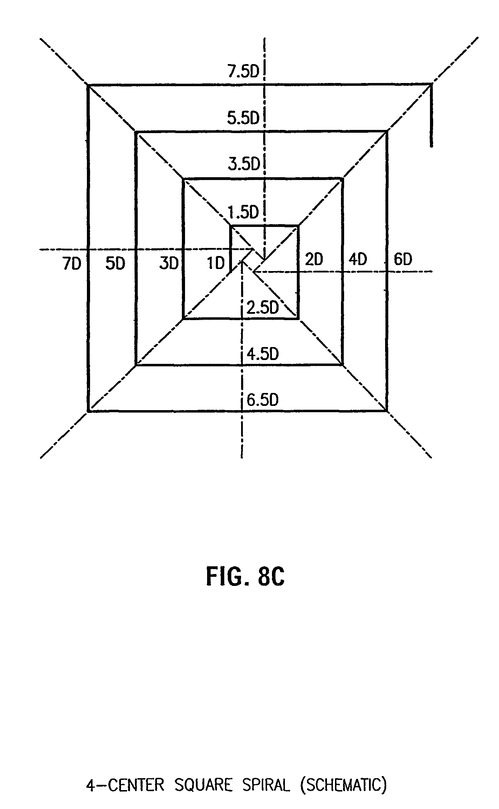

Figure 8A show is an example of a rectangular coil, in this instance a square coil. The corners are all identical 90 degree segments of pipe where the radius of curvature is small, for example the minimum bending radius. These corners are joined by straight segments of pipe of increasing length so that an outer loop of pipe just spirals around the inner loops. Such a spiral could be constructed by welding the straight segments to the corners. In this case the corners would be such short pieces of pipe that they could be bent in a rotary die bender employing a mandrel, which would permit very tight bends without ovaling the pipe. No two of the pipe segments are the same length, they increase by 1/2 of the pipe diameter over the preceding segment. This is an example of a 4-center, square spiral, which is also shown schematically in figure 8C. Figure 8B shows a 2-center square spiral which has the advantage that half the straight pipe segments are the same length as the preceding segment, thereby having the number of different pipe lengths which might have manufacturing advantages. If all of the pipe segments in two parallel sides of the square were increased in length by a fixed addition, the resulting figure would be a rectangular spiral. If the long side of the rectangle is fairly long, the number of welded corners relative to the total volume of the coil diminishes, thus improving economics. At the same time the radius of the corners could be reduced to say 2D, at which point the space lost in the interior of the coil would be minimized. The combined effect could be to produce a low-cost coil that would do good job of filling a rectangular space.

Now are described superimposing and connecting in pairs horizontal spirals described in the previous section. For practical applications, the coil stack will need to be many layers high, for example 20 layers. However since a layer only interacts with the one below or the one above, we shall restrict the following discussion to two adjacent layers and how they may be joined into a pair.

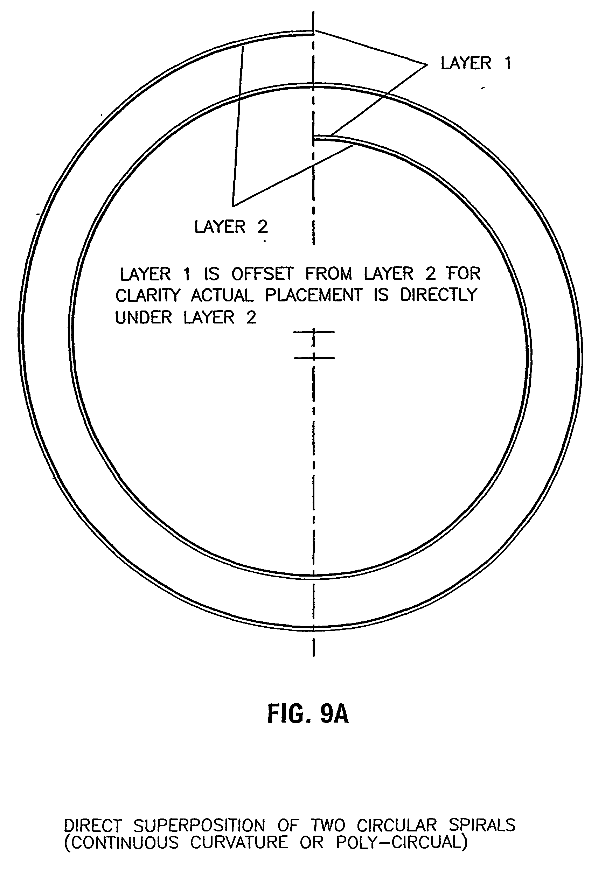

Fig. 9A shows a second identical spiral is placed directly on top of the first. The result is perfect cubic packing but connections are awkward inasmuch as the pipe ends are adjacent and pointing in the same direction. The joining fittings would be simple loops. We do not believe this configuration will prove to be of interest.

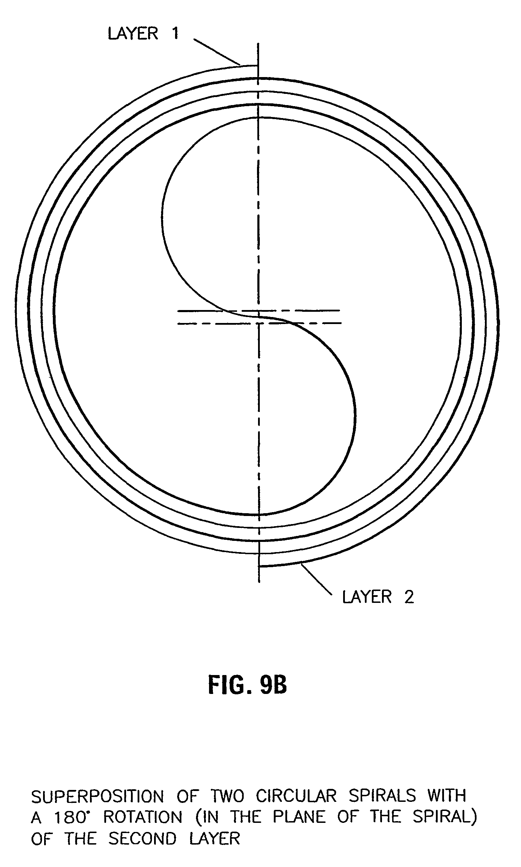

Fig. 9B shows an embodiment in which a second identical spiral is rotated 180° in its own plane before superposition. The two layers fit together with perfect hexagonal packing. The inner ends can be joined together by welding an S-bend fitting which, since it is short, can be tightly bent employing a mandrel if necessary. This configuration looks to be of interest, for both circular and rectangular spirals, where winding the spirals in pancakes is not significantly less efficient than continuous winding of the coil stack in one sense with continuous pipe.

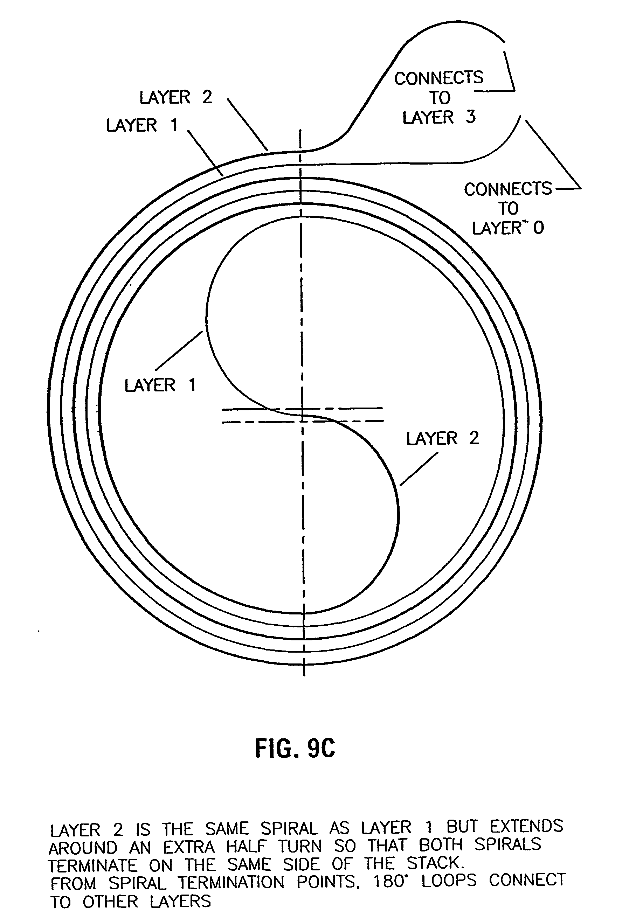

Fig. 9C shows a similar design to Fig. 9B except the second layer is longer by one-half turn so that the two outside ends end up on the same side of the coil. This may be useful if there is a benefit from having all the inter-layer connecting fittings ("ears") located on the same side of the coil stack as, for example, with rectangular stacks.

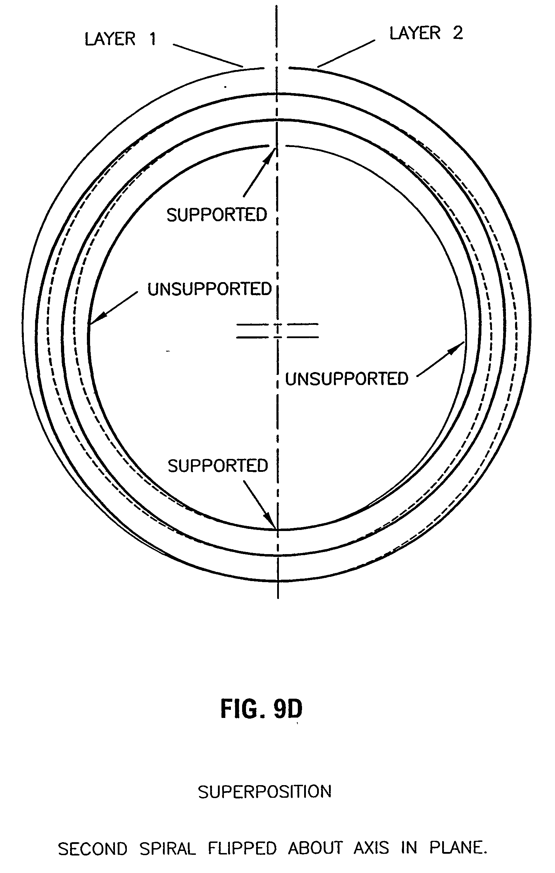

In Fig. 9D, the second identical spiral is flipped over, that is to say rotated 180 degrees about and axis in its plane before superposition. We now have an "in/out" configuration as might be produced by continually winding pipe in one direction. The ends are opposed to each other and can easily be joined, after allowing for the difference in level. The joints could be by S-bend fittings or, in the case of continual winding, by the pipe being bent into the S-bend configuration in the vertical dimension. There is a serious problem of pipe support however since the stacking of the two layers is neither cubic nor hexagonal. Pipe on the second layer only crosses pipe in the first layer at points 180° apart, and is essentially unsupported in between. This is an unacceptable situation which can be solved by the use of stepped spirals as discussed below.

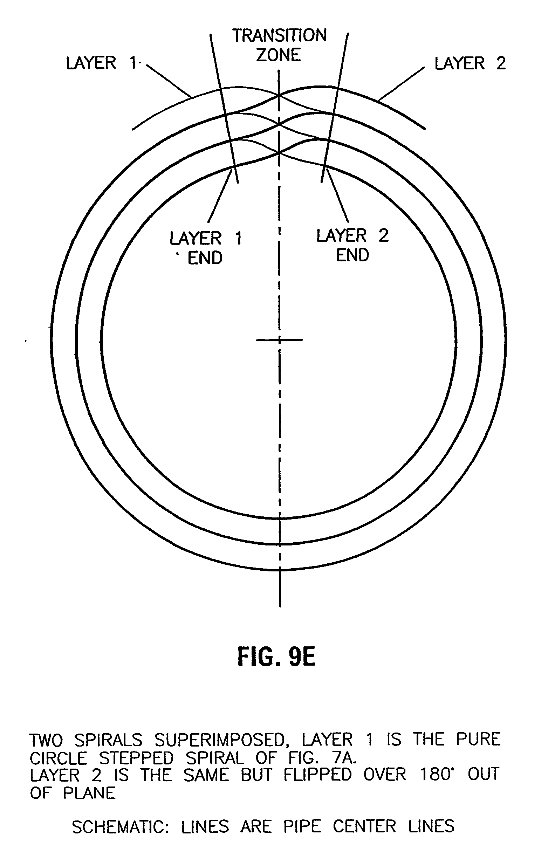

In Fig. 9E, two identical circular stepped spirals with the second one flipped over. These are the spirals of figure 7A. Since the great majority of the turns of these spirals are perfect circles, when the second one is flipped over its pipes will lie directly over those of the first spiral resulting in cubic packing. Only the transition zones do not attain cubic packing but these are short and there is not a serious problem of unsupported pipe. Since the second spiral has been flipped, we now have the in/out configuration and such pairs could be produced by a machine winding in one sense with continuous pipe provided it could accomplish the level change from one spiral to the adjacent spiral with the S-bend in the third dimension at the extreme outside and extreme inside.

In Fig. 9F, the first spiral is one of those in figure is 5A 6A or 6B and the superimposed spiral is a double inward stepping spiral of the type shown in figure 7B with the reservation that the base spiral of the latter is identical to the first spiral. See Figure 9F. The situation is very similar to Fig. 9E above except that the second spiral is not flipped over. Since it is the same spiral as the one underneath, except for the transition region, cubic packing results. The double crossover converts an outward spiral into an inward spiral so that, as in Fig. 9E, the ends are readily joined two adjacent spirals with a small S-bend in the third dimension. Thus with an appropriate machine this combination of layers can be wound from continuous pipe.

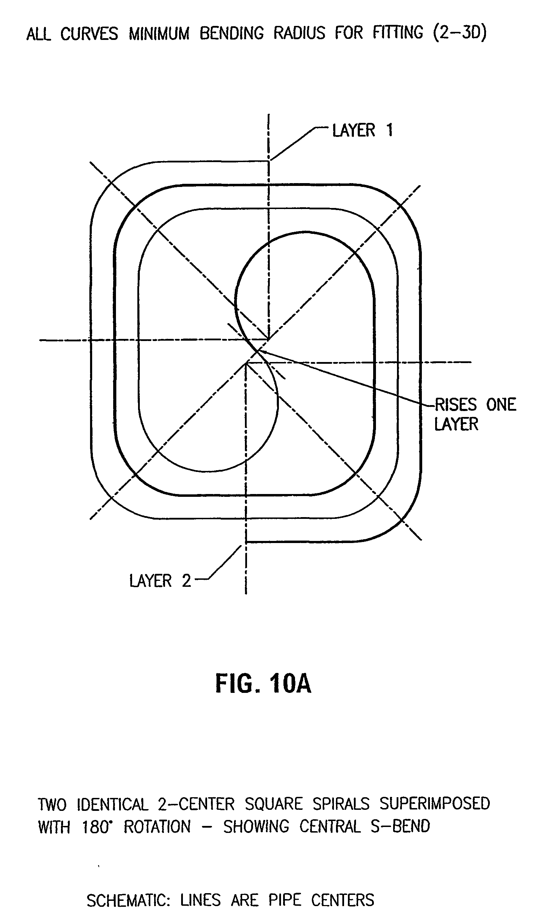

In Fig. 10a, the first spiral is a rectangular with either two or four centers and the superimposed spiral is identical but rotated through 180 degrees in its own plane. The situation is directly analogous to Fig. 9B except that the circular spiral is replaced by a rectangular spiral, so that again we have hexagonal packing. Since both spirals are outbound, they must be joined in the interior by the large S-bend fitting which also rises one pipe diameter in the third dimension. The outside ends of the double layer appear at the opposite sides.

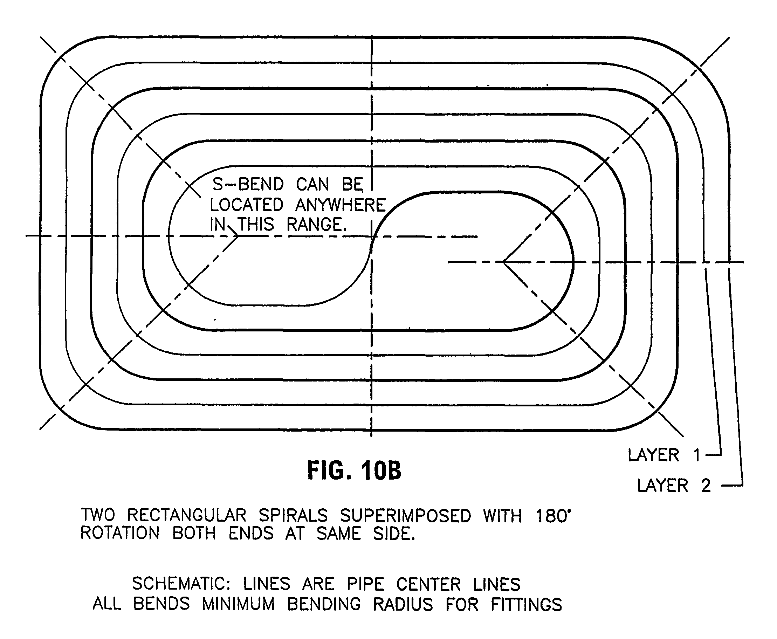

In Fig. 10B, the same situation is shown as in Fig. 10A except that one of the layers has been lengthened by two more segments, 180°, so that both outside ends appear at the same side of the rectangle. This may be useful either to improve the packing of adjacent rectangles or squares or to arrange that all the external pipe connections occur at one end of the rectangle as may suit a barge, for example.

Now are described stacks of spiral pairs and their connections. The previous section has considered how the spirals identified in Figs. 5A, 5B, 6A, 6B, 7A 7B, 7C 8A, 8B and 8C can be combined in pairs to satisfy a stacking criterion, for example, that the resulting pair should have primarily cubic packing or hexagonal packing. Because of the symmetry of a flat spiral from one side to the other, if spiral B fits on top of spiral A with hexagonal packing, then spiral A will also fit on top of spiral B with hexagonal packing. Continuing in this way, a stack of many identical pairs with hexagonal packing will possess hexagonal packing throughout.

Stacking identical pairs will of course produce a columnar array in the vertical sense. However the upper layers do not need to possess as many turns as the lower layers. If each layer possesses one less turn than the one below it, the stack will angle inwards at 30 degrees off the vertical for a hexagonal stack or 45 degrees off the vertical for a cubic stack. The result is a stack of pyramidical form. A pyramidical stack will obviously makes less demands on its containment structure than a columnar stack, and this can be beneficial in some circumstances.

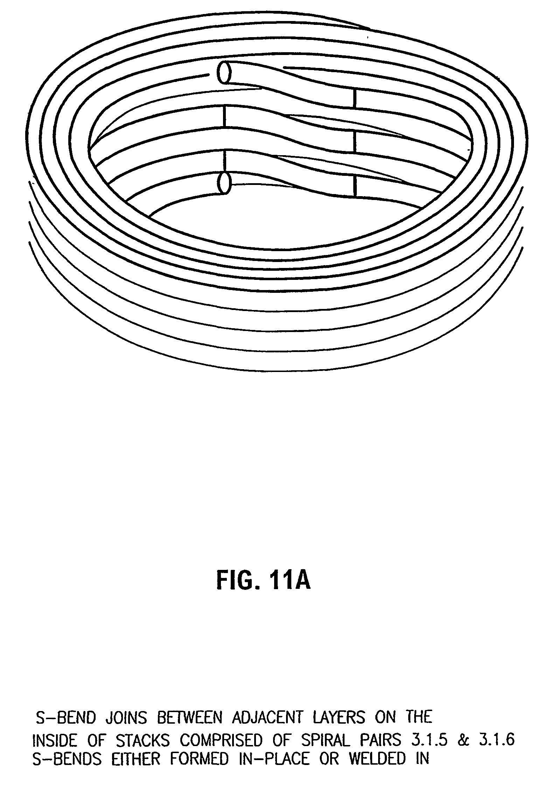

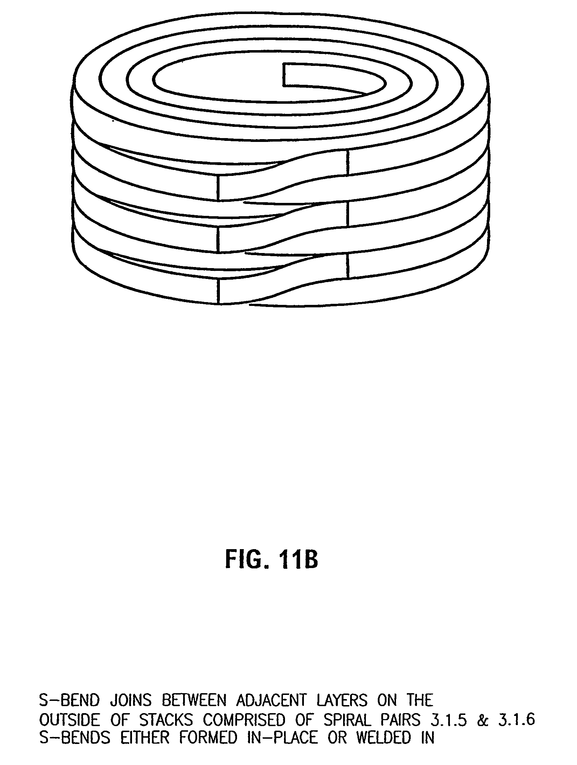

Of the spiral pairs discussed in the previous section, the designs of Figs. 9E and 9F (stepped circular) possess the property of cubic packing (except for the transition zones). They also possess the property that adjacent layers are spirals of opposite handedness. This in turn means that the pipe at the end of one spiral is facing in the opposite direction to the pipe at the beginning of the next spiral which means that they can be readily joined by an S-bend that is rising from one layer to the other. It also means that they can be produced in a continuous winding process if that process has the ability to make the S-bend in the third dimension. If not, the S-bend must be a fitting that is welded in. These S-bends will be needed both on the inside of the spirals and on the outside. The situation is depicted in figures 11A and 11B.

Of the spiral pairs discussed in the previous section, Figs. 9B and 9C (circular) and Figs. 10a and 10B (rectangular) possess the property of hexagonal packing. They possess this property since both spirals have the same handedness which means that the pipe at the end of one spiral is facing in the same direction as the pipe at the end of the adjacent spiral. To join one to the other requires a loop of pipe which turns through 180 degrees. A simple loop joining adjacent pipes may be used. If the criterion of minimum bending radius is observed, these loops can be awkward and may not pack well against the vertical sides of the stack. However if there is room away from the stack, which may well be the case with circular stacks packed in a cubic fashion, these 180 degree loops can be essentially coplanar with the spirals and stick out to the side. This is depicted in Fig. 9B where the loops are joining every second layer on one side of the stack with similar loops on the other side of the stack (not shown), and the design of Fig. 9C where the loops are joining adjacent layers. These horizontal connecting loops of adjacent or next adjacent layers may be desirable in the situation where there is a liquid phase in the pipe and there is concern about the pooling of liquids where there are low spots in the structure, since this style of loop does not provide a point for pooling.

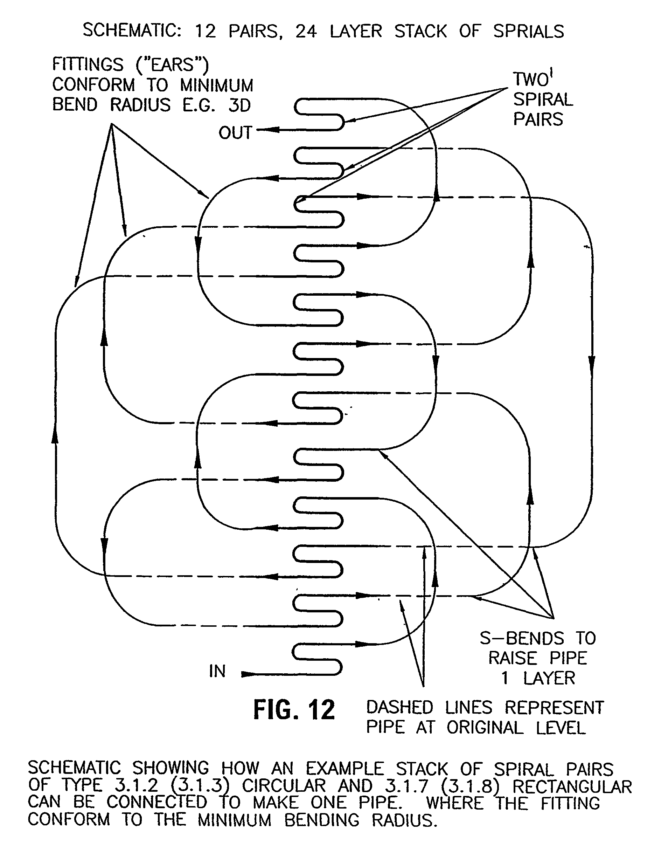

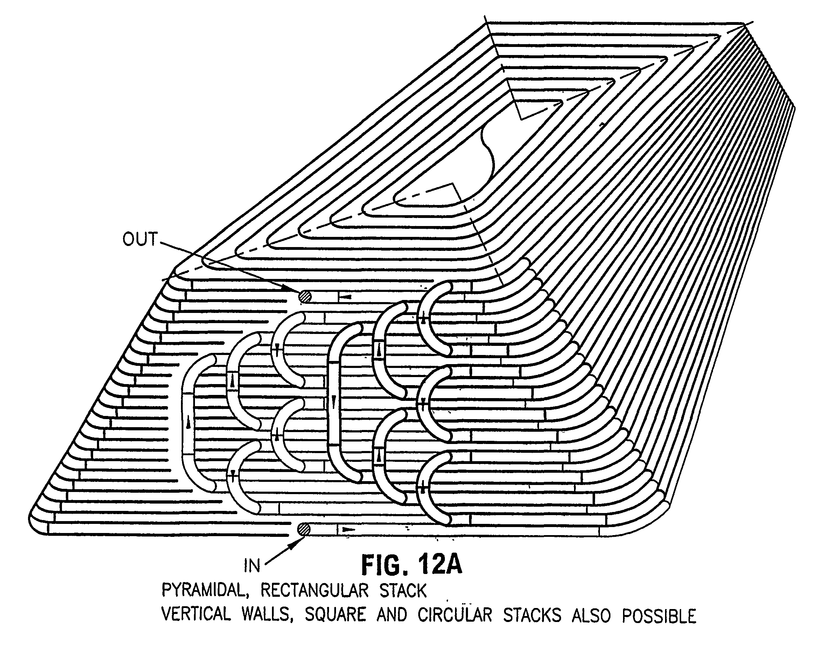

In many other situations, particularly with rectangular spirals, the close packing of the stacks is important, and to have the loops sticking out away from the stack is undesirable. The loops of adjoining layers may be twisted into the vertical and pressed against the stack to improve the packing, but a better solution is obtained by not trying to join adjacent layers. The situation is represented schematically in figure 12A where loops of the minimum bending radius, in this instance assumed to be approximately 3D, are used to join pipe ends that are at least six pipe diameters away in the vertical sense. These loops ("ears") are in a vertical plane parallel to the vertical wall of the stack where the vertical plane is located one pipe diameter outside the stack so that all the loops must begin with an S-bend in the plane of the spirals that moves them outwards by one pipe diameter. In this example there are 12 pairs in the style of the designs of Figs. 9B and 10A stacked with 12 pipe endings on each side. The schematic shows how these may be joined by ears on the two sides so as to provide one continuous pipe path through all 24 spirals. Where a volume of only one pipe diameter thick by 10 pipe diameters wide has been lost on each side. If the pairs are in the style of Fig. 9C and 10B then instead of half the ears appearing on the other side of the stack, both sets of ears can appear adjacent to each other on the same side of stack. This will be attractive when close packing is important. For example if both sets of ears appear on one side of a rectangular stack, only one extra pipe diameter has been added to the length of the stack to provide these connections.

The combination of a rectangular stack with pairs of style Fig. 10B, hexagonal packing and tight fitting ears as described above provides the highest pipe density of any of the designs described here, assuming the space to be filled is essentially rectangular.

The US patent No. 5,839,383 referred to above described in detail the steel structure designed to support the stack of Figs. 11A and 11B. With appropriate modifications, a similar steel structure could be used to support the other styles of stack described here.

The patent also proposed the use of a matrix filling the space between the pipes as a means of providing support to the pipes and hence reducing the tendency to oval which encourages fatigue. One form a matrix proposed was water with its specific gravity adjusted by other additives to make it closer to that of the pipe. What was not mentioned was the idea that the matrix should have a high heat capacity in order to reduce the temperature swings in the wall of the pipe during loading and unloading and otherwise to increase the thermal mass of the containment as a whole. A significant improvement in thermal properties will be obtained by using mixtures of water and one of the common glycols for higher densities (specific gravity 1.1) and higher temperatures (freezing point around -40 degrees Fahrenheit) or water and methanol for lower densities (.9) and lower temperatures (-40 to -80 Fahrenheit). Water is attractive because it has both a high specific heat and a high heat of melting.

With respect to essentially solid matrices, desirable properties are low cost low density and the ability to conform closely to the pipe so as to provide maximum support. This suggests the use of low cost plastics such as polyethylene or mixed plastic scrap where after the coil stack has been completed with appropriate quantities of plastic between the layers, the temperature can be raised by, for example, passing steam through the pipes, so that the plastic matrix can be softened and allowed conform to the pipes. A product with similar properties that might also be considered is pitch derived from coal or petroleum which may or may not be oxidized. The effective viscosity of any of these matrices must be very very high at ambient temperatures, and for all practical purposes be a solid. The viscosity may be increased if necessary by the addition of fibrous material. While it may seem strange to support steel pipe with such products, note that they are being used purely in compression and the pressures are not very high, for example, 10 to 20 psi at the most.

The need for matrix support becomes more important with the move to higher strength materials for pipe construction as described in the next section, which encourages the move to thinner walled pipe, since the resistance to ovaling by a pipe varies as the third power of the wall thickness.

A most important factor in the commercial value of the transportation of natural gas in compressed form is its density. There are two basic ways to increase the density of gas, namely, to increase the pressure and reduce the temperature. In the case of CNG transportation, the cost of the pressure containment system is all-important. The move away from conventional line pipe, which is low cost, to low nickel, low temperature steel such as that described in application PCT/US98/12726 is deterred by the higher cost per ton of the steel. This is also true of composite pipe, in particular carbon fiber composite continuous pipe of the same pressure rating as the pipeline pipe. As a rule of thumb, carbon fiber pipe costs 1 1/2 times as much as ordinary steel pipe for the same pressure rating. Low nickel here means from about 1% to 5% nickel by weight.

At ambient temperatures like 30 to 50 degrees Fahrenheit, there is a very large difference in the density of the gas between low pressures such as 1000 to 1500 psi and high pressures such as 3000 to 4000 psi. But as the temperature approaches within 20 degrees Fahrenheit of the critical point of the gas, the difference decreases markedly. As a result it is possible to obtain the same or even higher gas density at say 1000 psi than with 3000 psi at ambient temperature. At this pressure range, carbon fiber pipe will cost about half as much per foot as ordinary line pipe. With pipe at half the cost, one can afford to use twice as much of it as line pipe and hence carry twice the tonnage of gas. With the cost of the ship and the cost of the pipe roughly the same, and double the cargo, the savings more than offset the added cost of refrigeration which itself is offset by the reduced cost of compression.

We thus have the surprising result that shipping economics can be improved by moving to more expensive containment materials.

When the temperature is lowered into the region of the critical point, the gas is frequently referred to as "dense phase" gas. Below the critical temperature, it is often referred to as a liquid, though there is no point at which its properties abruptly change. Within the phase envelope below the critical pressure for a range of temperatures, the compressed gas is accompanied such liquid. These several forms of the gas can all be handled by the above containment systems and for the purpose of this patent document we refer to all forms as "compressed fluid".

### Materials of construction of the pipe may be:

1. Ordinary API line pipe steel.
2. Quench and tempered steel.
3. High-strength low-temperature steel with a nickel content of less than three percent, which may also be quench and tempered.
4. Steel pipe wound with high tensile reinforcing fibers such as carbon fiber or high tensile steel wire in essentially the hoop direction only. This is a way to double the pressure capacity of the pipe at minimum increase in cost and weight.
5. Composite pipe composed of helical windings of high-strength fibers embedded in a matrix about a relatively low strength core pipe with, ideally, low permeability to methane.
6. While the above are of most interest, many other materials are possible such as extruded aluminum, extruded oriented polyolefin, ceramic fiber reinforced metals, etc.

### Considerations for coil stack construction include:

1. Ease and speed of manufacture, e.g. continuous winding, efficient testing.
2. Ease of repair: in the case of the stacked coselles, this favors coils of horizontal pancakes allowing a leaking pancake to be shunted around.
3. Inspect ability: for steel pipe that is subject to corrosion, this means it must be possible to pass an intelligent pig through the entire coil which means essentially constant internal diameter plus corners that the pig can navigate, for example, of radius greater than 2D
4. Operational considerations: in the case where significant quantities of produced liquids will be formed, there should not be low points were pooling might occur, and where fluid push is to be employed, the pipe diameter should be small enough that over-riding or under-riding of the fluid is minimal.
5. Space filling: in general, the maximum density of pipe should be favored considering the space available to be filled, which means rectangular coils will typically be favored and flanges avoided inside the coil.
6. Safety: avoidance of fatigue cracking requires that ovaling of the pipe be kept to a minimum which in turn means that roll-bent pipe must be of a certain minimum radius, and to minimize the consequences of a crack due to any cause, the pipe diameter should be of modest size so that the rate of flow of gas through a large crack is self-choked by the modest pipe diameter.
The invention has now been described with reference to the preferred embodiments and substitution of parts and other modifications will now be apparent to persons of ordinary skill in the art. Immaterial modifications from what is illustrated are intended to come within the scope of the invention.

## Claims

1. A containment structure comprising:
plural loops of coiled pipe formed into at least a first layer and a second layer lying on top of the first layer;
**characterised by** :
pipe forming connections between the first and second layers;
wherein said plural loops of coiled pipe of at least one of the first and second layers includes segments having a constant radius.

2. The containment structure according to claim 1, wherein coiled pipe in the first layer is coiled in a different manner from coiled pipe in the second layer.

3. The containment structure according to claim 1 wherein:
said coiled pipe in at least one of the layers being formed with sections having different radiuses of curvature.

4. The containment structure according to claim 1 wherein:
said coiled pipe in at least one of the layers being formed with sections forming portions of nested perfect circles.

5. The containment structure according to claim 1 wherein:
said coiled pipe in at least one of the layers being formed with sections having different centers of curvature.

6. The containment structure according to claim 1 wherein:
said pipe forming connections are between non-adjacent layers.

7. The containment structure according to claim 1 further comprising:
a support matrix formed of mixtures of different fluids surrounding said layers of pipe.

8. The containment structure according to claim 1 further comprising:
a support matrix comprising a fluid having a specific gravity greater than 1.

9. The containment structure according to claim 1 comprising:
a support matrix comprising a plastic material conformed to the pipe.

10. The containment structure according to claim 1 wherein:
said plural loop of coiled pipe forming a structure having a pyramidal form.

11. The containment structure according to claim 1 wherein:
said pipe being carbon fiber or other composite pipe.

12. The containment structure according to claim 1 wherein:
said pipe being made of steel containing nickel in the range of up to 5% by weight.

13. The containment structure according to claim 1 wherein:
said pipe is operated at sufficiently close to the critical temperature of the compressed fluid contained within it to render the use of composite pipe or low nickel steel pipe economical.

14. The containment structure according to claim 1 wherein said coiled pipe in at least one of the layers is formed with nested nearly complete circles.

15. The containment structure according to claim 1 wherein:
said pipe is conventional steel pipe operated close to the critical temperature of the compressed fluid contained within it but still in the ductile temperature range of the pipe because the critical temperature has been raised by the addition of natural gas liquids.

16. The containment structure according to claim 1 wherein said layers are stacked with hexagonal packing.

17. The containment structure according to claim 1 wherein said layers are stacked with close to 100% cubic packing.

18. The containment structure according to claim 1 wherein said successive layers are identical to preceding layers but have been rotated 180 degrees.

19. The containment structure according to claim 1 wherein close to 100% of the coiled pipe in a succeeding layer lies directly on top of coiled pipe in a preceding layer, apart from a transition zone in which coiled pipe in the succeeding layer crosses over to another supporting pipe in the preceding layer.

20. The containment structure of claim 19 in which the transition zone occupies less than 6% of the area of a layer.

21. The containment structure of claim 20 in which the transition zone occupies less than 50 pipe diameters.

22. The containment structure of claim 21 in which coiled pipe in the first layer spirals in a series of constant radius segments.

23. The containment structure of claim 1 in which coiled pipe in the first layer is coiled in alternating first and second half-circles, with each second half-circle being a half pipe diameter greater in radius than a first half-circle.

24. The containment structure of claim 20 in which there are alternating odd and even numbered layers of coiled pipe, and coiled pipe in even numbered layers rises to form an odd numbered layer.

25. The containment structure of claim 24 in which, in the transition zone, coiled pipe in even numbered layers alters its radius from the center of curvature by two pipe diameters.

26. The containment structure of claim 25 in which the coiled pipe has a lowermost layer that is an odd numbered layer.

27. The containment structure of claim 25 in which the coiled pipe has a lowermost layer that is an even numbered layer.

28. The containment structure of claim 19 in which the coiled pipe is formed within a container having an inner wall and an outer wall.

29. The containment structure of claim 28 in which the inner wall is stepped.

30. The containment structure of claim 29 in which the coiled pipe is equipped with valves for containing fluid.

31. The containment structure of claim 30 in which the coiled pipe is used for the storage of compressed gas.

32. The containment structure according to claim 1, wherein each layer comprises a continuous constant diameter coiled pipe formed in a single layer of alternating constant radius circle segments, in which each circle segment covers 360/n degrees, with each succeeding circle segment being 1/n pipe diameters greater in radius than a preceding circle segment, where n is greater than 1.

33. The containment structure of claim 32 in which n is 2.

34. The containment structure of claim 32 in which coiled pipe in any kth segment abuts coiled pipe in the k+nth segment for each kth segment except segments forming an outer boundary of the containment structure, to thus form a gapless structure.

35. The containment structure of claim 32 in which succeeding circle segments have offset centers of curvature.

36. The containment structure of claim 1, wherein said segments of constant radius comprise straight pipe segments.

37. A method of forming a containment structure, comprising the steps of:
forming a continuous coiled pipe in at least a first layer; and
forming a second layer lying on top of the first layer;
forming pipe connections between the first and second layers;
wherein at least one of said first and second layers includes segments having a constant radius.

38. The method of claim 37 in which coiled pipe in the second layer lies directly on top of and aligned with the coiled pipe in the first layer, apart from a transition zone in which coiled pipe in the second layer crosses over to another supporting pipe in the first layer.

39. The method of claim 37 in which coiled pipe is radially offset by two pipe diameters through the transition zone.

40. The method of claim 38 further including forming a third layer by the coiled pipe in the second layer rising to start a third layer.

## Patentansprüche

1. Behälteraufbau mit:
Mehrfachschleifen mit Rohrschlangen, die zu mindestens einer ersten Schicht und einer zweiten Schicht, welche oben auf der ersten Schicht liegt, geformt sind;
**dadurch gekennzeichnet, daß**
rohrbildende Verbindungen zwischen den ersten und zweiten Schichten vorgesehen sind;
wobei die Mehrfachschleifen mit Rohrschlangen mindestens einer der ersten und zweiten Schichten Segmente mit einem konstanten Radius aufweisen.

2. Behälteraufbau nach Anspruch 1, wobei die Rohrschlange in der ersten Schicht in unterschiedlicher Weise schraubenförmig gewunden ist gegenüber der Rohrschlange in der zweiten Schicht.

3. Behälteraufbau nach Anspruch 1, wobei:
die Rohrschlange in mindestens einer der Schichten mit Sektionen mit unterschiedlichen Krümmungsradien gebildet ist.

4. Behälteraufbau nach Anspruch 1, wobei:
die Rohrschlange in mindestens einer der Schichten mit Sektionen gebildet ist, welche Abschnitte ineinandergeschachtelter perfekter Kreise bilden.

5. Behälteraufbau nach Anspruch 1, wobei:
die Rohrschlange in mindestens einer der Schichten mit Sektionen gebildet ist, die unterschiedliche Krümmungsmittelpunkte haben.

6. Behälteraufbau nach Anspruch 1, wobei:
sich die rohrbildenden Verbindungen zwischen nichtangrenzenden Schichten befinden.

7. Behälteraufbau nach Anspruch 1, ferner mit:
einer Stützmatrix, die aus Mischungen unterschiedlicher Fluide gebildet ist, welche die Rohrschichten umgeben.

8. Behälteraufbau nach Anspruch 1, ferner mit:
einer Stützmatrix mit einem Fluid, welches ein spezifisches Gewicht größer als 1 hat.

9. Behälteraufbau nach Anspruch 1, mit:
einer Stützmatrix, die ein Kunststoffmaterial entsprechend dem Rohr aufweist.

10. Behälteraufbau nach Anspruch 1, wobei:
die Mehrfachschleife mit Rohrschlangen einen Aufbau mit einer Pyramidenform bildet.

11. Behälteraufbau nach Anspruch 1, wobei:
das Rohr ein Kohlenstoffaser- oder ein Rohr aus anderem Verbundwerkstoff ist.

12. Behälteraufbau nach Anspruch 1, wobei:
das Rohr aus Stahl hergestellt ist, der Nickel in einem Bereich von bis zu 5 Gew.-% enthält.

13. Behälteraufbau nach Anspruch 1, wobei:
das Rohr bei ausreichend nahe der kritischen Temperatur des komprimierten Fluids betrieben wird, das in ihm enthalten ist, um die Verwendung des Rohres mit Verbundmaterial oder des Stahlrohres mit niedrigem Nickelanteil wirtschaftlich zu machen.

14. Behälteraufbau nach Anspruch 1, wobei die Rohrschlange in mindestens eine der Schichten mit ineinandergeschachtelten, nahezu vollständigen Kreisen gebildet ist.

15. Behälteraufbau nach Anspruch 1, wobei:
das Rohr ein herkömmliches Stahlrohr ist, welches nahe an der kritischen Temperatur des komprimierten Fluids betrieben wird, das in ihm enthalten ist, aber noch in dem Bereich der Verformungstemperatur des Rohres, weil die kritische Temperatur durch die Zugabe von Erdgasflüssigkeiten angehoben wurde.

16. Behälteraufbau nach Anspruch 1, wobei die Schichten mit hexagonalen Packen gestapelt sind.

17. Behälteraufbau nach Anspruch 1, wobei die Schichten mit nahezu 100 % kubischen Packen gestapelt sind.

18. Behälteraufbau nach Anspruch 1, wobei die aufeinanderfolgenden Schichten mit vorhergehenden Schichten identisch sind, aber um 180° gedreht wurden.

19. Behälteraufbau nach Anspruch 1, wobei nahezu 100 % der Rohrschlange in einer nachfolgenden Schicht direkt oben auf der Rohrschlange in einer vorhergehenden Schicht liegt, im Abstand von einer Übergangszone, in welcher die Rohrschlange in der folgenden Schicht in ein anderes Stützrohr in der vorhergehenden Schicht übergeht.

20. Behälteraufbau nach Anspruch 19, bei welchem die Übergangszone weniger als 6 % der Fläche einer Schicht einnimmt.

21. Behälteraufbau nach Anspruch 20, in welchem die Übergangszone weniger als 50 Rohrdurchmesser einnimmt.

22. Behälteraufbau nach Anspruch 21, bei welchem sich die Rohrschlange in der ersten Schicht spiralförmig in einer Reihe von Segmenten mit konstantem Radius windet.

23. Behälteraufbau nach Anspruch 1, in welchem die Rohrschlange in der ersten Schicht in abwechselnden ersten und zweiten Halbkreisen schraubenförmig gewunden ist, wobei jeder zweite Halbkreis einen halben Rohrdurchmesser im Radius größer ist als ein erster Halbkreis.

24. Behälteraufbau nach Anspruch 20, bei welchem es abwechselnd ungradzahlige und gradzahlige Schichten mit Rohrschlangen gibt, wobei die Rohrschlange in gradzahligen Schichten ansteigt, um eine ungradzahlige Schicht zu bilden.

25. Behälteraufbau nach Anspruch 24, bei welchem in der Übergangszone die Rohrschlange in ganzzahligen Schichten ihren Radius von dem Krümmungsmittelpunkt um zwei Rohrdurchmesser ändert.

26. Behälteraufbau nach Anspruch 25, bei welchem die Rohrschlange eine unterste Schicht hat, die eine ungradzahlige Schicht ist.

27. Behälteraufbau nach Anspruch 25, bei welchem die Rohrschlange eine unterste Schicht hat, die eine geradzahlige Schicht ist.

28. Behälteraufbau nach Anspruch 19, bei welchem die Rohrschlange in einem Behälter gebildet ist, der eine innere Wand und eine äußere Wand hat.

29. Behälteraufbau nach Anspruch 28, bei welchem die innere Wand gestuft ist.

30. Behälteraufbau nach Anspruch 29, bei welchem die Rohrschlange mit Ventilen zur Aufnahme eines Fluids ausgestattet ist.

31. Behälteraufbau nach Anspruch 30, bei welchem die Rohrschlange für die Lagerung von komprimiertem Gas verwendet wird.

32. Behälteraufbau nach Anspruch 1, wobei jede Schicht eine Rohrschlange mit einem kontinuierlichen, konstanten Durchmesser aufweist, die in einer einzigen Schicht abwechselnder Kreissegmente mit konstantem Radius gebildet ist, in welchen jedes Kreissegment 360/n Grad abdeckt, wobei jedes folgende Kreissegment im Radius 1/n Rohrdurchmesser größer ist als ein vorhergehendes Kreissegment, bei dem n größer als 1 ist.

33. Behälteraufbau nach Anspruch 32, bei welchem n gleich 2 ist.

34. Behälteraufbau nach Anspruch 32, bei welchem die Rohrschlange in jedem k-ten Segment in der Nachbarschaft der Rohrschlange in dem k+n-ten Segment für jedes k-te Segment mit Ausnahme der Segmente angeordnet ist, welche eine äußere Grenze des Behälteraufbaus bilden, um somit einen lückenlosen Aufbau zu bilden.

35. Behälteraufbau nach Anspruch 32, bei welchem aufeinanderfolgende Kreissegmente versetzte Krümmungsmittelpunkte haben.

36. Behälteraufbau nach Anspruch 1, wobei die Segmente mit konstantem Radius gerade Rohrsegmente haben.

37. Verfahren zum Bilden eines Behälteraufbaus, welches folgende Schritte aufweist:
Bilden einer kontinuierlichen Rohrschlange in mindestens einer Schicht; und
Bilden einer zweiten Schicht, die oben auf der ersten Schicht liegt;
Bilden von Rohrverbindungen zwischen den ersten und zweiten Schichten;
wobei mindestens eine der ersten und zweiten Schichten Segmente aufweist, die einen konstanten Radius haben.

38. Verfahren nach Anspruch 37, bei welchem die Rohrschlange in der zweiten Schicht direkt oben auf der Rohrschlange in der ersten Schicht liegt und mit dieser ausgerichtet ist, im Abstand von einer Übergangszone, in welcher die Rohrschlange in der zweiten Schicht in ein anderes Stützrohr in der ersten Schicht übergeht.

39. Verfahren nach Anspruch 37, bei welchem die Rohrschlange um zwei Rohrdurchmesser durch die Übergangszone radial versetzt ist.

40. Verfahren nach Anspruch 38, ferner mit dem Bilden einer dritten Schicht durch die Rohrschlange in der zweiten Schicht mit einem Anstieg, um eine dritte Schicht zu beginnen.

## Revendications

1. Structure de confinement, comprenant :
plusieurs boucles de tuyau enroulé formées en au moins une première couche et une deuxième couche disposée au-dessus de la première couche ;
**caractérisée par** : des raccords de formation de tuyau entre les première et deuxième couches ;
dans laquelle lesdites plusieurs boucles de tuyau enroulé d'au moins l'une des première et deuxième couches comprennent des segments ayant un rayon constant.

2. Structure de confinement selon la revendication 1, dans laquelle le tuyau enroulé de la première couche est enroulé de manière différente du tuyau enroulé de la deuxième couche.

3. Structure de confinement selon la revendication 1, dans laquelle :
ledit tuyau enroulé d'au moins l'une des couches est formé de sections ayant des rayons de courbure différents.

4. Structure de confinement selon la revendication 1, dans laquelle :
ledit tuyau enroulé d'au moins l'une des couches est formé de sections formant des parties de cercles parfaits emboîtés.

5. Structure de confinement selon la revendication 1, dans laquelle :
ledit tuyau enroulé d'au moins l'une des couches est formé de sections ayant des centres de courbure différents.

6. Structure de confinement selon la revendication 1, dans laquelle :
lesdits raccords de formation de tuyau se trouvent entre des couches non adjacentes.

7. Structure de confinement selon la revendication 1, comprenant en outre :
une matrice de support formée de mélanges de fluides différents entourant lesdites couches de tuyau.

8. Structure de confinement selon la revendication 1, comprenant en outre :
une matrice de support comprenant un fluide ayant une gravité spécifique supérieure à 1.

9. Structure de confinement selon la revendication 1, comprenant :
une matrice de support comprenant une, matière plastique conformée au tuyau.

10. Structure de confinement selon la revendication 1, dans laquelle :
lesdites plusieurs boucles de tuyau enroulé forment une structure ayant une forme pyramidale.

11. Structure de confinement selon la revendication 1, dans laquelle :
ledit tuyau est en fibre de carbone ou est un tuyau composite autre.

12. Structure de confinement selon la revendication 1, dans laquelle :
ledit tuyau est réalisé en acier contenant du nickel dans la plage allant jusqu'à 5 % en masse.

13. Structure de confinement selon la revendication 1, dans laquelle :
ledit tuyau est utilisé à une température suffisamment proche de la température critique du fluide comprimé contenu dans celui-ci pour rendre économique l'utilisation d'un tuyau composite ou d'un tuyau en acier à faible teneur en nickel.

14. Structure de confinement selon la revendication 1, dans laquelle ledit tuyau enroulé d'au moins l'une des couches est formé de cercles presque complets emboîtés.

15. Structure de confinement selon la revendication 1, dans laquelle :
ledit tuyau est un tuyau en acier classique utilisé à une température proche de la température critique du fluide comprimé contenu dans celui-ci, mais demeure dans la plage de température ductile du tuyau du fait de l'élévation de la température critique par l'addition de liquides de gaz naturel.

16. Structure de confinement selon la revendication 1, dans laquelle lesdites couches sont empilées selon un conditionnement hexagonal.

17. Structure de confinement selon la revendication 1, dans laquelle lesdites couches sont empilées selon un conditionnement cubique proche de 100 %.

18. Structure de confinement selon la revendication 1, dans laquelle lesdites couches successives sont identiques à des couches qui précèdent mais tournées de 180 degrés.

19. Structure de confinement selon la revendication 1, dans laquelle pratiquement 100 % du tuyau enroulé d'une couche suivante est disposé directement au-dessus d'un tuyau enroulé d'une couche précédente, en dehors d'une zone de transition dans laquelle le tuyau enroulé de la couche suivante passe par-dessus un autre tuyau de support de la couche qui précède.

20. Structure de confinement selon la revendication 19, dans laquelle la zone de transition occupe moins de 6 % de la superficie d'une couche.

21. Structure de confinement selon la revendication 20, dans laquelle la zone de transition occupe moins de 50 diamètres de tuyau.

22. Structure de confinement selon la revendication 21, dans laquelle le tuyau enroulé de la première couche forme une spirale d'une série de segments à rayon constant.

23. Structure de confinement selon la revendication 1, dans laquelle le tuyau enroulé de la première couche est enroulé en premiers et seconds demi-cercles alternés, chaque second demi-cercle ayant un demi-diamètre de tuyau supérieur au rayon d'un premier demi-cercle.

24. Structure de confinement selon la revendication 20, dans laquelle on trouve des couches alternées numérotées impaires et paires de tuyau enroulé, et le tuyau enroulé en couches numérotées paires s'élève pour former une couche numérotée impaire.

25. Structure de confinement selon la revendication 24, dans laquelle, dans la zone de transition, le tuyau enroulé en couches numérotées paires change de rayon, de deux diamètres de tuyau, à partir du centre de courbure.

26. Structure de confinement selon la revendication 25, dans laquelle la couche la plus en bas du tuyau enroulé est une couche numérotée impaire.

27. Structure de confinement selon la revendication 25, dans laquelle la couche la plus en bas du tuyau enroulé est une couche numérotée paire.

28. Structure de confinement selon la revendication 19, dans laquelle le tuyau enroulé est formé à l'intérieur d'un conteneur comportant une paroi intérieure et une paroi extérieure.

29. Structure de confinement selon la revendication 28, dans laquelle la paroi intérieure est étagée.

30. Structure de confinement selon la revendication 29, dans laquelle le tuyau enroulé est équipé de vannes dans le but de contenir un fluide.

31. Structure de confinement selon la revendication 30, dans laquelle le tuyau enroulé est utilisé pour le stockage d'un gaz comprimé.

32. Structure de confinement selon la revendication 1, dans laquelle chaque couche comprend un tuyau enroulé continu de diamètre constant formé en une seule couche de segments alternés de cercles de rayon constant, dans laquelle chaque segment de cercle couvre 360/n degrés, chaque segment de cercle suivant ayant un diamètre de tuyau de 1/n plus grand que le rayon d'un segment de cercle qui précède, où n est supérieur à 1.

33. Structure de confinement selon la revendication 32, dans laquelle n a une valeur de 2.

34. Structure de confinement selon la revendication 32, dans laquelle le tuyau enroulé d'un quelconque k^{ème} segment bute contre le tuyau enroulé du k+n^{ème} segment de chaque k^{ème} segment excepté des segments formant une frontière extérieure de la structure de confinement, pour ainsi former une structure sans vide.

35. Structure de confinement selon la revendication 32, dans laquelle des segments de cercles qui se suivent ont des centres de courbure décalés.

36. Structure de confinement selon la revendication 1, dans laquelle lesdits segments de rayon constant comprennent des segments rectilignes de tuyau.

37. Procédé de formation d'une structure de confinement, comprenant les étapes, dans lesquelles :
on forme un tuyau enroulé continu en au moins une première couche ; et
on forme une deuxième couche disposée au-dessus de la première couche ;
on forme des raccords de tuyau entre les première et deuxième couches ;
dans lequel au moins l'une desdites première et deuxième couches comprend des segments ayant un rayon constant.

38. Procédé selon la revendication 37, dans lequel le tuyau enroulé de la deuxième couche est disposé directement au-dessus du tuyau enroulé de la première couche, et est aligné avec celui-ci, à l'exception d'une zone de transition dans laquelle le tuyau enroulé de la deuxième couche passe par-dessus un autre tuyau de support de la première couche.

39. Procédé selon la revendication 37, dans lequel le tuyau enroulé est décalé radialement de deux diamètres de tuyau dans la zone de transition.

40. Procédé selon la revendication 38, comprenant en outre la formation d'une troisième couche en élevant le tuyau enroulé de la deuxième couche pour commencer une troisième couche.
